# EUROPEAN PATENT APPLICATION

(11) **EP 4 524 649 A1**
(43) Date of publication of application: **19.03.2025**
(21) Application number: 23803487.0
(22) Date of filing: 28.04.2023
(51) Int. Cl.: G02F 1/15, G02C 7/10, G02F 1/153, G03H 1/02

(54) **ELECTROCHROMIC ELEMENT, EYEGLASS LENS, EYEGLASSES, AND MOLD**

(30) Priority: 09.05.2022 JP 2022076852
(71) Applicant: Hoya Lens Thailand Ltd., Pathumthani 12130 (TH)
(72) Inventor: KAWAKAMI, Hironori, Tokyo 160-8347 (JP); MIYAZAKI, Shigeki, Tokyo 160-8347 (JP); KAGA, Tadashi, Tokyo 160-8347 (JP)
(74) Representative: Hoffmann Eitle
(86) International application number: PCT/JP2023/016831
(87) International publication number: WO 2023/219009

(57) **Abstract**

An objective is to provide an electrochromic element, a lens for spectacles or the like in which an undulation is controlled by adjusting the difference in reflection power to be within a predetermined range. An electrochromic element (10) of the present invention is an electrochromic element in which a lens substrate (1) and an electrochromic film (2) are laminated together, in which an absolute value of a difference in reflection power in 30% or more of spaces between local regions adjacent to each other among individual local regions obtained by splitting a 40 mm × 40 mm range at a center of a surface into 5 mm × 5 mm regions is 0.05 D or more and 0.5 D or less, a surface of the electrochromic film has an undulation, and a maximum height undulation (Wz) in 30% or more of the individual 5 mm × 5 mm local regions obtained by splitting the 40 mm × 40 mm range at the center of the surface is 6 µm or more and 30 µm or less.

## Description

### [Technical Field]

The present invention relates to an electrochromic element whose coloring and discoloring can be reversibly controlled by electricity, a lens for spectacles, spectacles, and a mold that is used to produce an electrochromic element.

### [Background Art]

Electrochromic elements that utilize an electrochromism phenomenon in which a voltage is applied to cause a reversible oxidation-reduction reaction and colors are reversibly changed are used as, for example, lenses for spectacles.

In a process of producing an electrochromic element, for example, an electrochromic film is preformed in a curved surface shape, and subsequently, the electrochromic film is arranged in a mold to injection-mold a lens substrate. The completed electrochromic element has a curved surface shape in which the electrochromic film is laminated on the surface of the lens substrate.

### [Citation List]

### [Patent Literature]

[PTL 1] Japanese Patent Application Publication No. 2022-25243

### [Summary of Invention]

### [Technical Problem]

The heating condition during the above-described preforming or injection molding is, for example, 100°C or higher, and an undulation is caused on the surface of the electrochromic element due to the influence of heat. The undulation appears as light and dark shading on the surface at the time of coloring the electrochromic element by applying an electric current thereto.

However, in the related art, the undulation on the surface was not controlled. Therefore, a difference in light and dark shading that appeared on the surface became large depending on the undulation. In addition, when an electrochromic element was applied to spectacles as a lens for spectacles, the difference in light and dark shading became large between the right and left lenses, and the product became defective.

The present invention has been made in order to address the above problem, and an objective of the present invention is to provide an electrochromic element in which an undulation is suppressed by adjusting the difference in reflection power and the maximum height undulation to be within predetermined ranges and a lens for spectacles.

In addition, another objective of the present invention is to provide spectacles in which the difference in light and dark shading between the right and the left is decreased using lenses for spectacles in which the absolute value of the difference in reflection power and the maximum height undulation have been adjusted to be within predetermined ranges.

Furthermore, still another objective of the present invention is to provide a mold that is used to produce an electrochromic element.

### [Solution to Problem]

An electrochromic element in one aspect of the present invention is an electrochromic element in which a lens substrate and an electrochromic film are laminated together, in which an absolute value of a difference in reflection power in 30% or more of spaces between local regions adjacent to each other among individual local regions obtained by splitting a 40 mm × 40 mm range at a center of a surface into 5 mm × 5 mm regions is 0.05 D or more and 0.5 D or less, and a surface of the electrochromic film has an undulation. In one aspect of the present invention, it is preferable that a maximum height undulation (Wz) in 30% or more of the individual 5 mm × 5 mm local regions obtained by splitting the 40 mm × 40 mm range at the center of the surface is 6 µm or more and 30 µm or less.

In one aspect of the present invention, it is preferable that the absolute value of the difference in reflection power in 50% or more of the spaces between the local regions adjacent to each other among the individual local regions is 0.05 D or more and 0.5 D or less.

In one aspect of the present invention, it is preferable that the absolute value of the difference in reflection power is 0.1 D or more and 0.5 D or less.

A lens for spectacles in one aspect of the present invention, in which the electrochromic element described above is used.

Spectacles in one aspect of the present invention, in which a plurality of the lenses for spectacles described above is used.

One aspect of the present invention is a mold for producing an electrochromic element in which a lens substrate and an electrochromic film are laminated together, the mold having a first die and a second die, in which the electrochromic element in which the lens substrate and the electrochromic film are joined together is enabled to be produced by arranging the electrochromic film in contact with an inner surface of the first die and injection-molding a material constituting the lens substrate into a cavity between the first die and the second die, and the inner surface of the first die that is to be in contact with the electrochromic film has an undulation.

In one aspect of the present invention, it is preferable that a maximum height undulation (Wz) in 30% or more of individual 5 mm × 5 mm local regions obtained by splitting a 40 mm × 40 mm range at a center of the inner surface is 6 µm or more and 30 µm or less.

### [Advantageous Effects of Invention]

According to the electrochromic element of the present invention, the difference in light and dark shading can be suppressed by adjusting the difference in reflection power and the maximum height undulation to be within predetermined ranges. In addition, when the electrochromic element is applied to spectacles, it is possible to decrease the difference in light and dark shading between the right and the left and to improve the yield.

### [Brief Description of Drawings]

[Fig. 1]

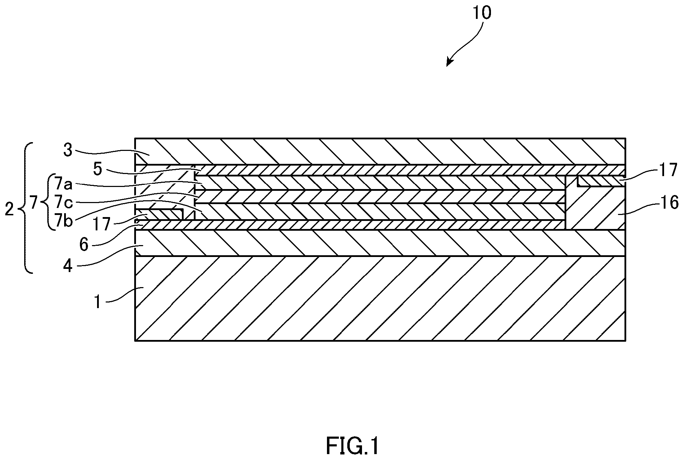

   Fig. 1 is a schematic cross-sectional view of an electrochromic element according to the present embodiment.
[Fig. 2A]

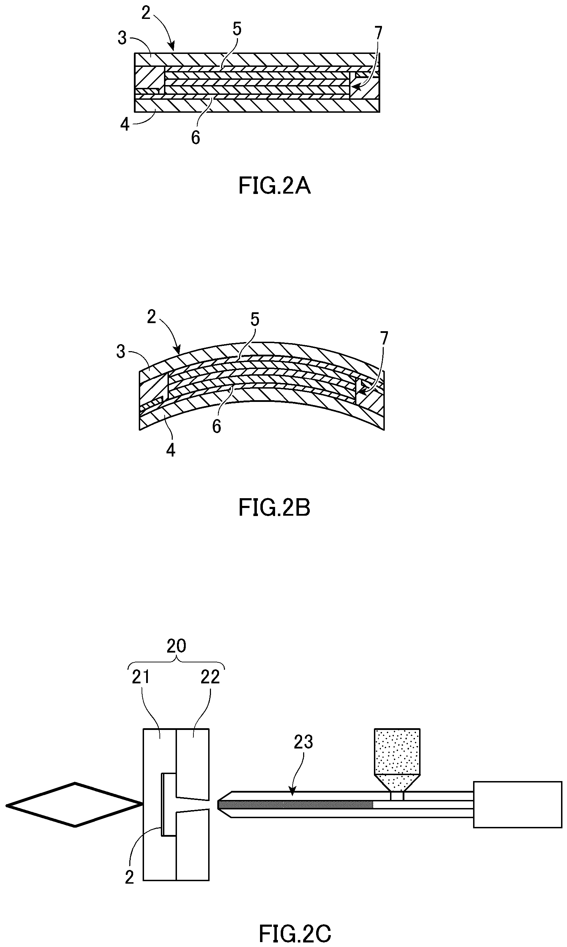

   Fig. 2A is an illustrative diagram showing a process of producing an electrochromic element according to the present embodiment.
[Fig. 2B]
   Fig. 2B is an illustrative diagram showing the process of producing an electrochromic element according to the present embodiment.
[Fig. 2C]
   Fig. 2C is an illustrative diagram showing the process of producing an electrochromic element according to the present embodiment.
[Fig. 2D]

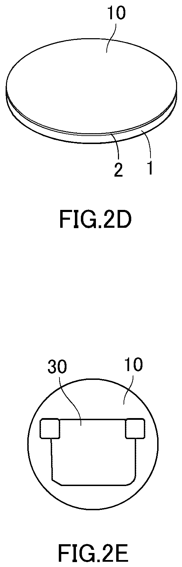

   Fig. 2D is an illustrative diagram showing the process of producing an electrochromic element according to the present embodiment.
[Fig. 2E]
   Fig. 2E is an illustrative diagram showing the process of producing an electrochromic element according to the present embodiment.
[Fig. 3]

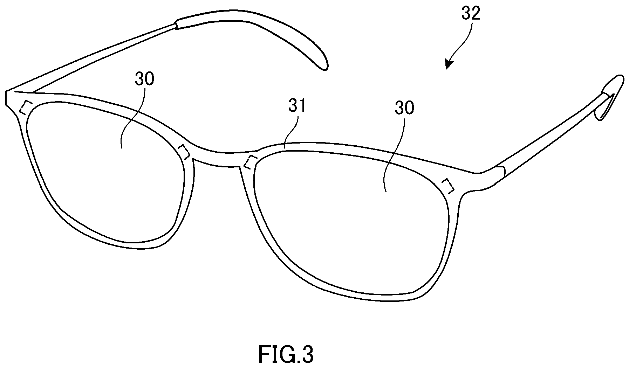

   Fig. 3 is a perspective view of spectacles for which an electrochromic technique is used.
[Fig. 4A]

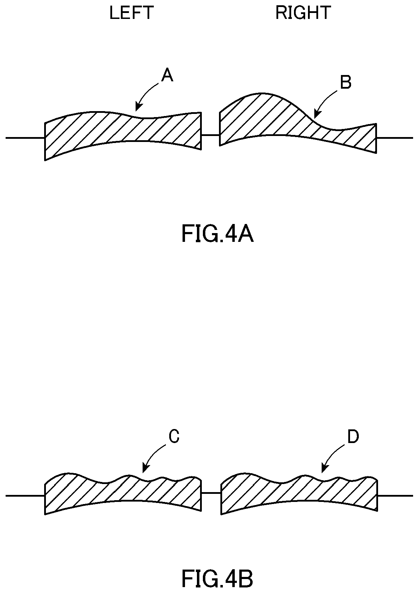

   Fig. 4A is a view conceptually showing undulations on surfaces of a pair of spectacle lenses and shows a comparative example.
[Fig. 4B]
   Fig. 4B is a view conceptually showing undulations on surfaces of a pair of spectacle lenses and shows an example.
[Fig. 5A]

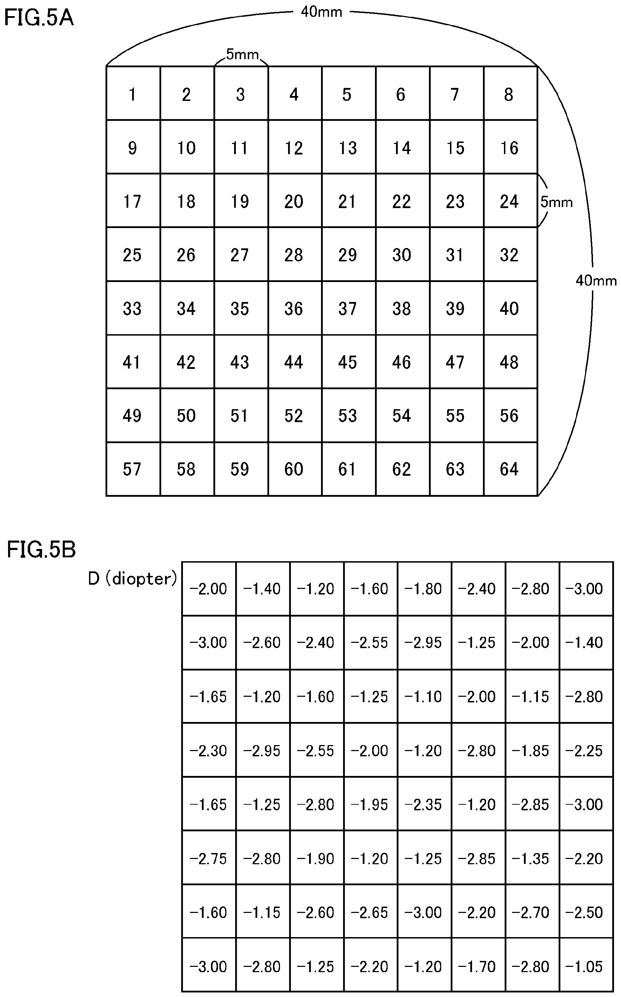

   Fig. 5A is a conceptual view showing the experiment results of the reflection powers of individual local regions in examples and the individual local regions obtained by splitting a 40 mm × 40 mm range on the central surface of the electrochromic element into 5 mm × 5 mm regions.
[Fig. 5B]
   Fig. 5B shows the experiment results of the reflection powers of the individual local regions in the examples and the reflection powers of the individual local regions obtained by splitting the 40 mm × 40 mm range on the central surface of the electrochromic element into the 5 mm × 5 mm regions.
[Fig. 6]

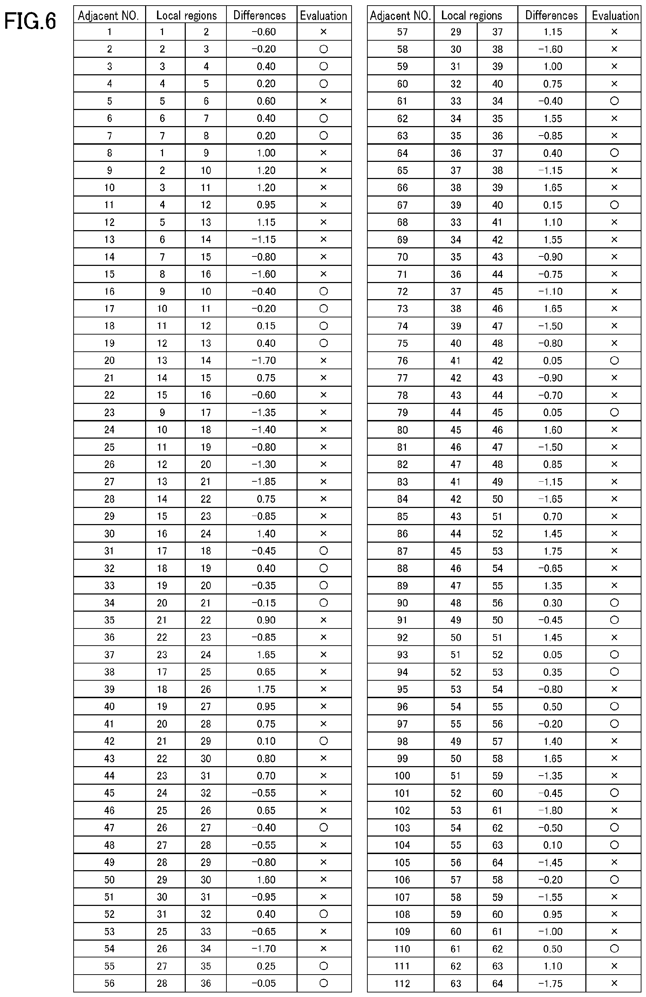

   Fig. 6 is a table showing differences in reflection power in spaces between the local regions adjacent to each other obtained from the reflection powers of the individual local regions of Fig. 5B.
[Fig. 7]

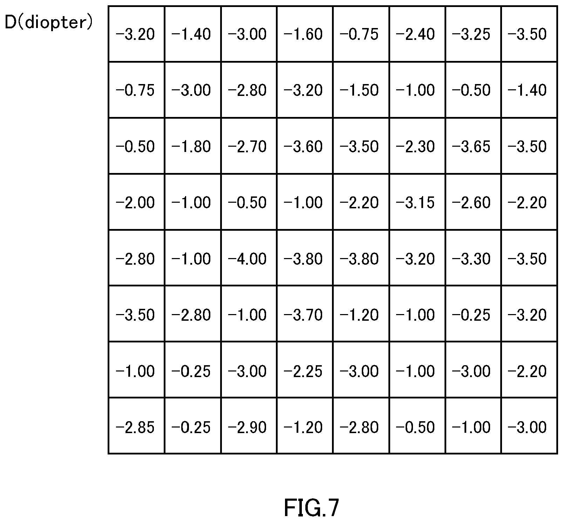

   Fig. 7 shows the experiment results of the reflection powers of individual local regions in the comparative example.
[Fig. 8]

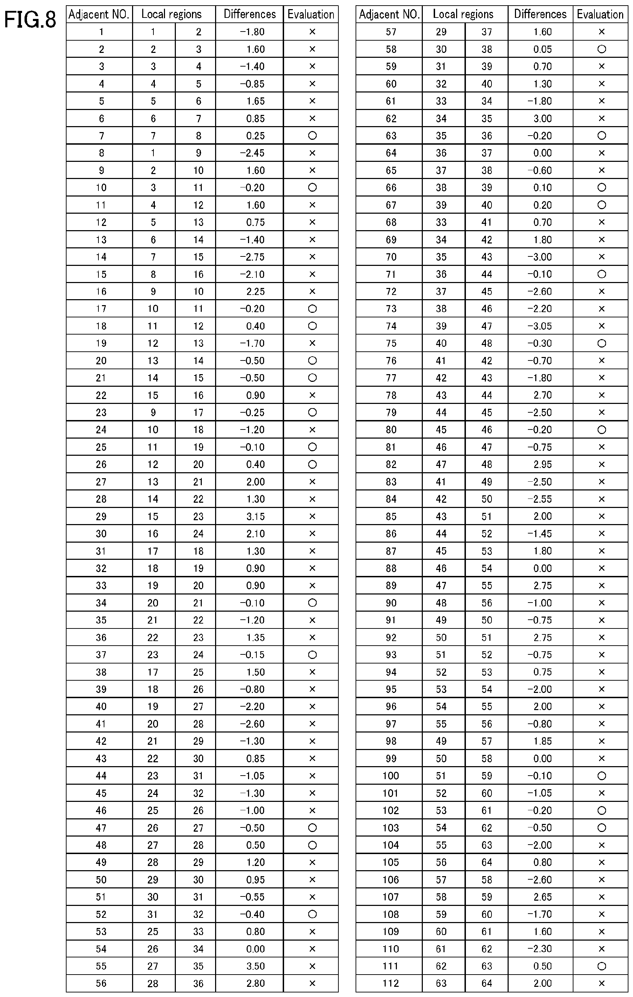

   Fig. 8 is a table showing differences in reflection power in spaces between the local regions adjacent to each other obtained from the reflection powers of the individual local regions of Fig. 7.

### [Description of Embodiments]

Hereinafter, a mode for implementing the present invention (hereinafter simply referred to as "the present embodiment") will be described in detail.

### <Electrochromic Element 10 in Present Embodiment>

Fig. 1 is a schematic cross-sectional view of an electrochromic element 10 according to the present embodiment. The electrochromic element 10 includes a lens substrate 1 and an electrochromic film 2 laminated on the surface of the lens substrate 1.

### [Lens Substrate 1]

The lens substrate 1 is required to be transparent and have high transmittance. The material of the lens substrate 1 is not limited, and examples thereof include resin substrates that can be molded in a mold such as a polycarbonate resin, an acrylic resin, an epoxy resin, and a phenolic resin, and glass substrates. Among these, the lens substrate 1 is preferably formed of a polycarbonate resin in consideration of moldability and production cost.

### [Electrochromic Film 2]

The electrochromic film 2 includes a pair of a first substrate 3 and a second substrate 4, a pair of a first electrode layer 5 and a second electrode layer 6 provided on the inner surfaces of the first substrate 3 and the second substrate 4, and an electrochromic layer 7 provided between the first electrode layer 5 and the second electrode layer 6. The electrochromic layer 7 includes a reduction layer 7a arranged on the side of the first electrode layer 5, an oxidation layer 7b arranged on the side of the second electrode layer 6, and an electrolyte layer 7c provided between the reduction layer 7a and the oxidation layer 7b. In this manner, in the electrochromic film 2, the second substrate 4/the second electrode layer 6/the oxidation layer 7b/the electrolyte layer 7c/the reduction layer 7a/the first electrode layer 5/the first substrate 3 are laminated in order from the bottom of Fig. 1. The reference sign 16 indicates a sealing layer, and the reference sign 17 indicates a metal terminal portion.

The substrates 3 and 4 constituting the electrochromic film 2 are in the form of a film or sheet, and can be formed of the same resin material as the lens substrate 1. Like the lens substrate 1, the substrates 3 and 4 are also required to be transparent and have high transmittance. Like the lens substrate 1, the substrates 3 and 4 are preferably formed of a polycarbonate resin.

Properties required for the electrode layers 5 and 6 constituting the electrochromic film 2 include transparency, high transmittance, and excellent conductivity. In order to satisfy such properties, the electrode layers 5 and 6 are transparent electrode layers, and an indium tin oxide (ITO) is particularly preferably used.

For the reduction layer 7a, the oxidation layer 7b and the electrolyte layer 7c constituting the electrochromic layer 7, existing materials can be used.

The reduction layer 7a is a layer that develops colors according to a reduction reaction. For the reduction layer 7a, existing reduced electrochromic compounds can be used. The reduced electrochromic compounds can be an organic substance or an inorganic substance, and are not limited, and examples thereof include azobenzene-based compounds, anthraquinone-based compounds, diarylethene-based compounds, dihydroprene-based compounds, dipyridine-based compounds, styryl-based compounds, styryl spiropyran-based compounds, spirooxazine-based compounds, spirothiopyran-based compounds, thioindigo-based compounds, tetrathiafulvalene-based compounds, terephthalic acid-based compounds, triphenylmethane-based compounds, triphenylamine-based compounds, naphthopyran-based compounds, viologen-based compounds, pyrazoline-based compounds, phenazine-based compounds, phenylenediamine-based compounds, phenoxazine-based compounds, phenothiazine-based compounds, phthalocyanine-based compounds, fluoran-based compounds, fulgide-based compounds, benzopyran-based compounds, and metallocene-based compounds, tungsten oxide, molybdenum oxide, iridium oxide, and titanium oxide.

The oxidation layer 7b is a layer that develops colors according to an oxidation reaction. For the oxidation layer 7b, existing oxidized electrochromic compounds can be used. The oxidized electrochromic compounds can be an organic substance or an inorganic substance, are not limited, and can be selected from, for example, a composition containing a radically polymerizable compound including triarylamine, a Prussian blue type complex, nickel oxide, iridium oxide and the like.

The electrolyte layer 7c has electronic insulation and ionic conductivity and is preferably transparent. The electrolyte layer 7c may be a solid electrolyte, a gel, or a liquid. In order to maintain high ionic conductivity, a gel is preferable. Although not limited, for example, existing electrolyte materials such as inorganic ion salts such as alkali metal salts and alkaline earth metal salts, quaternary ammonium salts and acids can be used.

In addition, while not shown in Fig. 1, a functional layer such as a hard coat layer or an anti-reflection layer can be provided on the surface of the electrochromic film 2.

### <Method of Producing Electrochromic Element in Present Embodiment>

Fig. 2 is an illustrative diagram showing a method of producing an electrochromic element according to the present embodiment.

In Fig. 2A, the electrochromic film 2 having the pair of substrates 3 and 4, the electrode layers 5 and 6 arranged inside of the substrates 3 and 4, and the electrochromic layer 7 interposed between the electrode layers 5 and 6 is prepared. The laminated structure of the electrochromic film 2 is not limited, and may be a laminated structure other than that shown in Fig. 2A.

Next, as shown in Fig. 2B, the electrochromic film 2 is preformed in a curved surface shape. At this time, the electrochromic film 2 is heated. The heating temperature is not limited, and is, for example, about 100°C.

When the electrochromic element of the present embodiment is applied to a lens for spectacles, since the lens for spectacles has a three-dimensional curved surface, it is preferable to preform the electrochromic film 2 into a three-dimensional curved surface before the lens substrate 1 is molded.

Subsequently, in Fig. 2C, the preformed electrochromic film 2 is set in a mold 20 composed of a first die 21 and a second die 22, and the lens substrate 1 is injection-molded using an injection molding machine 23. At the time of the injection molding, heat is applied. The heating temperature is not limited, and is, for example, about 120°C. In Fig. 2C, the inside space of the mold 20 is shown in a rectangular shape, but the inner surface with which the electrochromic film 2 comes into contact or the inner surface on the injection opening side has a curved surface shape.

Next, as shown in Fig. 2D, the electrochromic element 10 in which the lens substrate 1 and the electrochromic film 2 are laminated together is removed from the mold 20, and as shown in Fig. 2E, the electrochromic element 10 is cut into the shape of a lens for spectacles to obtain a lens for spectacles 30.

### <Problems in Conventional Electrochromic Element and Overview of Present Embodiment>

Electrochromic elements are elements that utilize an electrochromism phenomenon in which a voltage is applied to both electrodes to cause a reversible oxidation-reduction reaction and colors are reversibly changed.

For example, spectacles 32 shown in Fig. 3 has electrochromic elements, for which the electrochromic technique is used, combined into a frame 31 as a pair of lenses for spectacles 30, and can function as sunglasses in bright places and clear lenses in dark places. It is possible to adjust the brightness to an optimal level by operating a switch or automatically.

As shown in Fig. 1, the electrochromic element 10 has a laminated structure in which the electrochromic film 2 having the electrode layers and the electrochromic layer is laminated on the surface of the lens substrate 1.

Incidentally, when the electrochromic element was applied to spectacles 32 as a lens for spectacles 30, and the spectacles 32 were colored as sunglasses by applying an electric current thereto, there were cases where light and dark shading appeared on the lens surface. It was found that the light and dark shading appears significantly according to the magnitude of an undulation on the surface of the lens.

The undulation is caused by heat that is applied to the electrochromic film 2 in a procedure of producing the electrochromic element 10. The heating temperature is not limited, and for example, heat of 100°C or higher acts on the electrochromic film 2. In addition, as shown in Fig. 2B and Fig. 2C, there is a preforming process of forming the electrochromic film 2 into a three-dimensional shape or a molding process of installing the electrochromic film 2 in the mold 20 and injection-molding the lens substrate 1, which does not limit a heating process.

Fig. 4A and Fig. 4B are conceptual views showing undulations on the surfaces of the individual lenses for spectacles 30 when a pair of the lenses for spectacles 30 are arranged in the right and left of a spectacle frame, Fig. 4A shows a comparative example, and Fig. 4B shows an example. In Fig. 4A and Fig. 4B, the undulations are shown in an exaggerated manner.

As shown in the comparative example of Fig. 4A, for example, in a combination of an undulation A of the left lens for spectacles being extremely small and an undulation B of the right lens for spectacles being extremely large, light and dark shading that varied in the right and the left appeared, and the product became defective. In the related art, since undulations were not controlled, light and dark shading that varied in the right and the left was likely to appear, and the yield decreased.

Therefore, the present inventors performed intensive studies and consequently controlled undulations by adjusting the difference in reflection power to be within a predetermined range. That is, in the present embodiment, the surface of the electrochromic film has an undulation, furthermore, a difference in light and dark shading that appears on the surface of the electrochromic film is suppressed by adjusting the difference in reflection power to be within a predetermined range, and a variation in the light and dark shading that appears in each lens is decreased.

That is, as shown in the example of Fig. 4B, undulations C and D are formed on the surfaces of the right and left lenses for spectacles, but the undulations C and D have become smaller than the undulation B of the comparative example shown in Fig. 4A. This makes it possible to suppress the difference in light and dark shading on the surface. In addition, as shown in Fig. 4B, a variation between the undulation C and the undulation D is smaller than the variation between the undulation A and the undulation B shown in Fig. 4A, and the undulations have become more uniform. Therefore, in the example of Fig. 4B, it is possible to make the difference in light and dark shading between the right and the left small and to improve the yield compared with those in the comparative example of Fig. 4A.

### <Detailed Description of Difference in Reflection Power>

In the present embodiment, the absolute value of the difference in reflection power in 30% or more of spaces between local regions adjacent to each other among individual local regions obtained by splitting a 40 mm × 40 mm range at the center of the surface of the electrochromic element into 5 mm × 5 mm regions is preferably 0.05 D or more and 0.5 D or less.

Hereinafter, the difference in reflection power will be described with an experiment.

### [Example 1]

### (1) Fabrication of Mold for Injection Molding

As the material of a mold 20 for injection molding shown in Fig. 2C, mold steel material STAVAX was used. At this time, it was possible to injection-mold an electrochromic element providing a central thickness of a lens for spectacles of about 2.0 mm, and in the mold 20, a first die 21 (convex base mold) having a form corresponding to the convex surface of a spherical lens so that the reflection power became -2.0 D (diopter) and a second die 22 (concave mold) corresponding to the first die 21 were prepared.

### (2) Processing of Micro Ripples (Embossing)

The convex base mold was set in a micro curved surface-forming machine including a diamond bit having a three-cornered hat shape (which may be a spherical shape or a half round shape) with a blade diameter of about 0.5 mm to 10 mm (preferably about several millimeters to 5 mm). The micro curved surface-forming machine is close to the configuration of a milling machine having an automatic rotation mechanism. At this time, the convex base mold was set in the micro curved surface-forming machine so that the center of the convex base mold, that is, the center of the finished lens became the center of embossing. In addition, the tip of the diamond bit was made to hit a position about 0.5 mm to 5 mm (preferably about several millimeters) outward from the center of the inner surface of the convex base mold so that a load fell within a range of about 0.01 to 0.50 kgf. The load is preferably about several of tenth kgf to 0.50 kgf.

While the convex base mold was rotated at a rotation speed of about 1 rpm to 100 rpm, a sequence of linearly changing the load of the diamond bit to loads that became -1% to -100% of the set value for 5 to 300 seconds and subsequently linearly returning the load to the initial set load from the reduced load for 5 to 300 seconds was combined, this sequence was executed for about 1 minute to 15 minutes, and the inner surface of the convex base mold was polished. The rotation speed is preferably set to about several tens rpm. In addition, the load is preferably changed linearly between the initial set value and somewhere between 0 rpm to several rpm. In addition, the linear change of the load is preferably performed for several seconds to several tens of seconds. In addition, the polishing time is preferably about several minutes to 5 minutes.

After that, furthermore, the diamond bit was made to hit a position 0.5 mm to 15 mm (preferably about several mm) outward, the same procedure as described above was repeated, and the inner surface of the convex base mold was embossed. After that, the inner surface was buff-polished, and the cutting polishing corners were rounded. The embossing was set so that the maximum cross-sectional height (Rt) became 30 µm or less. Hereinafter, the mold that has been embossed as described above will be referred to as "convex embossed mold."

### (3) Injection Molding

As an injection molding machine for the injection molding, α100iA (manufactured by FANUC Corporation: mold clamping 100 t, injection 50 t) was used, and a lens substrate was injection-molded using the convex embossed mold and the concave mold. An electrochromic film processed to be a curved surface by preforming was set on the inner surface side of the convex embossed mold, and polycarbonate for which bisphenol A was used as a raw material was injected. It was confirmed that the electrochromic film adhered to the injected polycarbonate. In addition, a surplus part of the electro film was cut off with a box cutter.

### (4) Polishing of Lens

The concave surface of the electrochromic element fabricated in the above-described process was cut and polished with a free form-type curve generator. The electrochromic element was processed so that the finished product became a plano lens having a central thickness of 2.0 mm.

### (5) Electrode Wiring

Electrode wiring was performed on a lead-out electrode portion for energization of the electrochromic film in the above-described plano lens.

### (6) Cutting and Edging

Cutting and edging were performed to combine the electrochromic element on which the electrode wiring had been performed into a spectacle frame, thereby obtaining a lens for spectacles. In the present example, round test frames having a diameter of 50 mm were used for both eyes, which made it possible to compare the difference between the right and the left. In addition, the lens for spectacles was combined into the frame and was connected to a power wiring of the frame. The frame is provided with an energization switch and a battery aside from the power wiring.

### (7) Experiment Method and Evaluation of Difference in Reflection Power

The reflection power distribution of the electrochromic element fabricated as described above was measured using Dual Lens Mapper.

As shown in Fig. 5A, in the measurement of the reflection power distribution, a 40 mm × 40 mm range including the center of the convex surface of the electrochromic element at the center was regarded as the measurement target region. In addition, this measurement target region was split into a total of 64 (8 × 8) sections. Each section will be referred to as "local region." The local region is 5 mm × 5 mm.

As shown in Fig. 5A, numbers of 1 to 64 were assigned to a total of 64 individual local regions, respectively. In addition, the average reflection power of each local region was measured using Dual Lens Mapper. The measurement results are shown in Fig. 5B. The unit is D (diopter).

In addition, the differences in reflection power in the spaces between local regions adjacent to each other were calculated. Fig. 6 is a table showing the differences of reflection power between local regions adjacent to each other. The number of the spaces between the local regions adjacent to each other (boundaries) was 112 in total. The spaces are denoted as "Adjacent No." in Fig. 6.

As shown in Fig. 6, for example, Adjacent No. 1 indicates the difference in reflection power between a local region with a reference sign 1 and a local region with a reference sign 2 shown in Fig. 5A. As shown in Fig. 5B, the average reflection power of the local region with the reference sign 1 was -2.00 D, and the average reflection power of the local region with the reference sign 2 was -1.40 D. Therefore, as shown in Fig. 6, the difference in reflection power of Adjacent No. 1 was - 0.60 D. The differences in average reflection power of all of Adjacent No. 1 to Adjacent No. 112 were calculated as described above.

In addition, when the absolute value was within a range of 0.05 D or more to 0.5 D, the difference in reflection power was evaluated as ∘; otherwise, the difference was evaluated as ×. In Example 1, it was found that, in 34 out of the 112 spaces, the absolute values of the difference in reflection power were within the range of 0.05 D or more to 0.5 D and the condition was satisfied in 30% or more of the spaces between the local regions adjacent to each other. In addition, it was found that the average reflection power was within a range of ±0.2 D, which was the designed power. The difference in reflection power contributes to an undulation on the surface of the electrochromic film. As the undulation becomes larger, the difference in reflection power becomes larger. When the absolute value of the difference in reflection power is set within the range of 0.05 D or more to 0.5 D as in the present example, it is possible to control an undulation that is formed in a 40 mm × 40 mm range at the center of the surface to be appropriately small and to control the pitch of the undulation to be substantially constant.

### (8) Method of Measuring Maximum Hight Undulation (Wz)

Three-dimensional mapping was performed on the 40 mm × 40 mm range at the center of the surface using Dektak XT-A manufactured by Bruker. The scan pitch at this time was set to 0.1 mm. In measurement data that is not corrected, since the curve shapes of eyeglass lenses overlap each other, the measurement data was corrected so as to be horizontal based on the theoretical value of the lens design, and Wz was then calculated. The results thereof are shown in the following Table 1.

**[Table 1]**

| Maximum height undulation | Proportion % |
|---|---|
| **1~5 *µ* m** | **8** |
| **6~10 *µ* m** | **10** |
| **11~20 *µ* m** | **12** |
| **21~30 *µ* m** | **16** |
| **30~40 *µ* m** | **25** |
| **41 *µ* m** or more | **29** |

As shown in Table 1, the proportion of the maximum height undulations (Wz) of 6 µm or more and 30 µm or less was 38%. (9) Sensory Evaluation When Applied to Spectacles Spectacles in which the electrochromic element of Example 1 was used were energized, and the coloring states of the right and left lenses after 5 minutes of the continuous energization were visually evaluated. As a result of confirming the difference in coloring state between the right and the left, it was possible to confirm that there was no particular discomfort and the coloring densities were uniform in the right and left lenses, which were suitable for spectacles. In addition, as a result of actually wearing the spectacles and confirming warping in the field of vision, no particularly significant differences were sensed in the right and the left.

### [Example 2]

In Example 2, an electrochromic element and spectacles were fabricated under the same production conditions as in Example 1 except that the initial load of the embossing in Example 1 was set to 0.03 to 0.10 kgf. In Example 2, the initial load of the embossing was set to be smaller than that in Example 1. As a result of measuring the absolute value of the difference in reflection power in the space between the individual local regions adjacent to each other in the same manner as in Example 1, it was found that the proportion of the absolute values falling into the range of 0.05 D to 0.5 D exceeded 50%. In addition, as a result of applying the electrochromic element to the spectacles and performing the same sensory evaluation as in Example 1, there were no significant differences in difference in light and dark shading between the right and left lenses, and there were also no significant differences in warping in the field of vision when the spectacles were worn.

The measurement results of the maximum height undulation (Wz) of Example 2 are shown in Table 2.

**[Table 2]**

| Maximum height undulation | Proportion % |
|---|---|
| **1~5 *µ* m** | **5** |
| **6~10 *µ* m** | **12** |
| **11~20 *µ* m** | **17** |
| **21~30 *µ* m** | **21** |
| **30~40 *µ* m** | **26** |
| **41 *µ* m** or more | **19** |

As shown in Table 2, the proportion of the maximum height undulations (Wz) of 6 µm or more and 30 µm or less was 50%.

### [Comparative Example]

In a comparative example, an electrochromic element and spectacles were fabricated under the same production conditions as in Example 1 except that the initial load was changed to 0.55 to 0.9 kgf so that the initial load at the time of the embossing became larger than that in Example 1. The measurement results of the maximum height undulation (Wz) of the comparative example are shown in Table 3.

**[Table 3]**

| Maximum height undulation | Proportion % |
|---|---|
| **1~5*µ* m** | **1** |
| **6~10 *µ* m** | **2** |
| **11~20 *µ* m** | **4** |
| **21~30 *µ* m** | **7** |
| **30~40 *µ* m** | **16** |
| **41 *µ* m** or more | **70** |

As shown in Table 3, the proportion of the maximum height undulations (Wz) of 6 µm or more and 30 µm or less was 13%.

Fig. 7 is the measurement results of the reflection powers of 64 individual local regions obtained by splitting a 40 mm × 40 mm range including the center of the convex surface of the electrochromic element at the center into 5 mm × 5 mm regions. Fig. 8 is the calculation results of the differences in reflection power in the spaces between the local regions adjacent to each other. The same numbers as in Fig. 5A were assigned to the local regions.

As shown in Fig. 8, when the absolute value of the difference in reflection power was within a range of 0.05 D or more to 0.5 D, the difference in reflection power was evaluated as ∘; otherwise, the difference was evaluated as ×. In the comparative example, it was found that, in 25 out of the 112 spaces, the absolute values of the difference in reflection power were within the range of 0.05 D or more to 0.5 D, which indicates that the condition was satisfied in less than 30% of the spaces between the local regions adjacent to each other. In addition, the average reflection power exceeded ±0.2 D, which was the designed power.

As a result of applying the electrochromic element of the comparative example to the spectacles and performing the sensory evaluation of the spectacles under the same conditions as in Example 1, a light and dark shading unevenness was shown between the right and left lenses, and furthermore, warping in the field of vision significantly appeared. Therefore, it was found that the electrochromic element of the comparative example cannot be used for spectacles.

The present embodiment has the following configuration along with the above-described absolute value of the difference in reflection power. That is, in the present embodiment, the surface of the electrochromic film 2 has an undulation, and the maximum height undulation (Wz) is 6 µm or more and 30 µm or less in 30% or more of the regions among the individual local regions obtained by splitting the 40 mm × 40 mm range at the center of the surface into 5 mm × 5 mm regions. It is confirmed that this numerical range is satisfied in both Example 1 and Example 2. In the present embodiment, it is possible to control the maximum height undulation (Wz) of the undulation that is formed on the surface of the electrochromic film 2 and to decrease the difference in light and dark shading that appears on the surface during the operation of the electrochromic element. In addition, it is possible to decrease the variation in light and dark shading that appears between the right and left lenses when the electrochromic element is applied to the spectacles, and there is no warping in the field of vision when the spectacles are worn, which makes it possible to effectively apply the electrochromic element to spectacles.

### <Characteristic Configuration of Present Embodiment>

The electrochromic element 10 of the present embodiment is an electrochromic element in which the lens substrate 1 and the electrochromic film 2 are laminated together, in which the absolute value of the difference in reflection power in 30% or more of the spaces between the local regions adjacent to each other among the individual local regions obtained by splitting the 40 mm × 40 mm range at the center of the surface into 5 mm × 5 mm regions is 0.05 D or more and 0.5 D or less, and the surface of the electrochromic film 2 has an undulation. In the present embodiment, it is preferable that the maximum height undulation (Wz) in 30% or more of regions of the individual 5 mm × 5 mm local regions obtained by splitting the 40 mm × 40 mm range at the center of the surface is 6 µm or more and 30 µm or less. It is more preferable that the above-described numerical range is satisfied in 35% or more of the regions.

In the present embodiment, the surface of the electrochromic element 10 has an undulation, and it is preferable that the undulation is controlled by adjusting the absolute value of the difference in reflection power. That is, in the present embodiment, the absolute value of the difference in reflection power in 30% or more of the spaces between the local regions adjacent to each other among the individual local regions is adjusted to be within a range of 0.05 D or more and 0.5 D or less, whereby it is possible to control the undulation to be appropriately small and to control the pitch of the undulation to be substantially constant. Therefore, it is possible to decrease the difference in light and dark shading between the right and left lenses when the electrochromic element 10 is applied to the spectacles 32 as the lens for spectacles 30, and there is no warping in the field of vision when the spectacles are worn, which makes it possible to effectively apply the electrochromic element to spectacles. The absolute value of the difference in reflection power being made to be less than 0.05 D makes limitations on the production conditions too severe, makes stable adjustment difficult, and is not realistic. In addition, when the proportion of the absolute values of the difference in reflection power being more than 0.5 D becomes large as in the comparative example, the light and dark shading unevenness becomes large, which is not practical. In the present embodiment, as a range where it is possible to realize stable production and to suppress a light and dark shading variation while the presence of an undulation is permitted, in the present embodiment, the absolute value of the difference in reflection power was adjusted to be within a range of 0.05 D or more and 0.5 D or less.

In addition, in the present embodiment, as described above, the surface of the electrochromic film 2 has an undulation, and the maximum height undulation (Wz) in 30% or more of regions of the individual 5 mm × 5 mm local regions obtained by splitting the 40 mm × 40 mm range at the center of the surface is 6 µm or more and 30 µm or less. As described above, in the present embodiment, it is possible to control the maximum height undulation (Wz) of the undulation that is formed on the surface of the electrochromic film 2 and to decrease the difference in light and dark shading that appears on the surface during the operation of the electrochromic element. In addition, it is possible to decrease a variation in light and dark shading that appears between the right and left lenses when the electrochromic element is applied to the spectacles, and there is no warping in the field of vision when the spectacles are worn, which makes it possible to effectively apply the electrochromic element to spectacles.

In addition, in the present embodiment, it is preferable that the absolute value of the difference in reflection power in 50% or more of the spaces between the local regions adjacent to each other among the individual local regions is 0.05 D or more and 0.5 D or less. Example 2 corresponds to this. This makes it possible to more effectively decrease the difference in light and dark shading that appears on the surface during the operation of the electrochromic element.

In addition, in the present embodiment, it is more preferable that the absolute value of the difference in reflection power is 0.1 D or more and 0.5 D or less. In Example 2, it has been confirmed that the absolute value of the difference in reflection power in 30% or more of the spaces between the local regions adjacent to each other among the individual local regions could be made to be within a range of 0.1 D or more and 0.5 D or less.

In addition, the present embodiment is the mold 20 for producing the electrochromic element 10 in which the lens substrate 1 and the electrochromic film 2 are laminated together, the mold having the first die 21 and the second die 22, in which the electrochromic film 2 is arranged in contact with the inner surface of the first die 21, and the material constituting the lens substrate 1 is injection-molded into the cavity between the first die 21 and the second die 22. At this time, the inner surface of the first die 21 that is to be in contact with the electrochromic film 2 has an undulation, and it is preferable that the maximum height undulation (Wz) in 30% or more of regions of the individual 5 mm × 5 mm local regions obtained by splitting the 40 mm × 40 mm range at the center of the inner surface is 6 µm or more and 30 µm or less. When the electrochromic element 10 is produced using this mold, it is possible to control the undulation that is formed on the surface of the electrochromic film 2 to be appropriately small and control the pitch of the undulation to be substantially constant.

### <Applications>

Although applications of the electrochromic element of the present embodiment are not limited, it can be preferably applied to a light control lens for spectacles. The electrochromic element of the present embodiment may be applied to those other than the lens for spectacles. Examples thereof include electrochromic light control devices and anti-glare mirrors.

### [Industrial Applicability]

In the electrochromic element of the present invention, an undulation that is formed on the surface is controlled by adjusting the absolute value of the difference in reflection power and the maximum height undulation. This makes it possible to decrease the difference in light and dark shading on the surface that is caused during the operation of the electrochromic element. Particularly, it is possible to decrease a variation in light and dark shading that appears between the right and left lenses when the electrochromic element has been applied to spectacles, and there is no warping in the field of vision when the spectacles are worn, which makes it possible to effectively apply the electrochromic element to spectacles.

This application is on the basis of Japanese Patent Application No. 2022-076852 applied on May 9, 2022. All of this content is included here.

## Claims

1. An electrochromic element in which a lens substrate and an electrochromic film are laminated together,
wherein an absolute value of a difference in reflection power in 30% or more of spaces between local regions adjacent to each other among individual local regions obtained by splitting a 40 mm × 40 mm range at a center of a surface into 5 mm × 5 mm regions is 0.05 D or more and 0.5 D or less, and a surface of the electrochromic film has an undulation.

2. The electrochromic element according to claim 1, wherein a maximum height undulation (Wz) in 30% or more of the individual 5 mm × 5 mm local regions obtained by splitting the 40 mm × 40 mm range at the center of the surface is 6 µm or more and 30 µm or less.

3. The electrochromic element according to claim 1 or 2, wherein the absolute value of the difference in reflection power in 50% or more of the spaces between the local regions adjacent to each other among the individual local regions is 0.05 D or more and 0.5 D or less.

4. The electrochromic element according to claim 1 or 2, wherein the absolute value of the difference in reflection power is 0.1 D or more and 0.5 D or less.

5. A lens for spectacles, wherein the electrochromic element according to claim 1 or 2 is used.

6. Spectacles, wherein a plurality of the lenses for spectacles according to claim 5 is used.

7. A mold for producing an electrochromic element in which a lens substrate and an electrochromic film are laminated together,
the mold comprising:
a first die; and
a second die,
wherein the electrochromic element in which the lens substrate and the electrochromic film are joined together is enabled to be produced by arranging the electrochromic film in contact with an inner surface of the first die and injection-molding a material constituting the lens substrate into a cavity between the first die and the second die, and
the inner surface of the first die that is to be in contact with the electrochromic film has an undulation.

8. The mold according to claim 7, wherein a maximum height undulation (Wz) in 30% or more of regions of individual local regions obtained by splitting a 40 mm × 40 mm range at a center of the inner surface into 5 mm × 5 mm regions is 6 µm or more and 30 µm or less.
